# EUROPÄISCHE PATENTSCHRIFT

(11) **EP 0 624 558 B1**
(45) Veröffentlichungstag und Bekanntmachung des Hinweises auf die Patenterteilung: **23.09.1998**
(21) Anmeldenummer: 94107201.9
(22) Anmeldetag: 09.05.1994
(51) Int. Cl.: C04B 35/00

(54) **Verfahren zur Herstellung keramischer Mikrostrukturen aus polymeren Precursoren**
Method of making ceramic microstructures from polymer precursors
Procédé de fabrication de structures céramiques à partir de précurseurs polymères

(30) Priorität: 14.05.1993 DE 4316184
(43) Veröffentlichungstag der Anmeldung: 17.11.1994
(73) Patentinhaber: HOECHST AKTIENGESELLSCHAFT, 65929 Frankfurt am Main (DE); INSTITUT FÜR MIKROTECHNIK MAINZ GmbH, 55129 Mainz-Hechtsheim (DE)
(72) Erfinder: Brück, Martin ., D-61276 Weilrod (DE); Vaahs, Tilo, Dr., D-65510 Idstein (DE); Böcker, Wolfgang, Dr., D-65817 Eppstein (DE); Ehrfeld, Wolfgang, Prof. Dr., D-55116 Mainz (DE); Lacher, Manfred, D-55116 Mainz (DE); Giebel, Ludwig, D-55129 Mainz (DE)

(56) Entgegenhaltungen:
- EP-A- 0 240 796
- EP-A- 0 468 066

## Beschreibung

Die vorliegende Erfindung betrifft ein Verfahren zur Herstellung von keramischen Mikrostrukturen.

Für die verschiedensten technischen Einsatzzwecke sowohl auf dem Gebiet der Mikroelektronik, der Mikrooptik, der Mikromechanik, der Mikrofluidik wie auch beim Einsatz zur Trennung von Stoffgemischen wird es mit wachsender Dringlichkeit notwendig, geeignete ultrapräzise Mikrostrukturen, sei es als Substratmaterialien, sei es als Funktionsmaterialien bereitzustellen, die in zunehmendem Ausmaß thermische und oxidative Beständigkeit besitzen und gleichzeitig gegen aggressive Chemikalien beständig sein sollen. Mit organischen Polymeren lassen sich zwar Mikrostrukturen mit ausreichender Präzision herstellen, die polymeren Werkstoffe werden aber durch eine Vielzahl von Chemikalien angegriffen und ihre Stabilität ist darüber hinaus nur innerhalb eines bestimmten Temperaturbereichs gewährleistet. Diese Nachteile können durch geeignete keramische Werkstoffe umgangen werden, insbesondere dann, wenn durch den Einsatzzweck hohe Temperaturen und/oder aggressive chemische Bedingungen vorgegeben werden. Keramische Materialien liegen aber meist als Pulver vor und lassen sich in diesem Aggregatzustand nicht ohne weiteres zu den ultrapräzisen Mikrostrukturen verformen, schließlich verändern sie sogar während des Sintervorganges meist noch ihre äußere Geometrie.

Die Herstellung solcher keramischer Mikrostrukturen über Verfahren wie Folienguß, Prägen, Schlickerguß oder Mikrospritzguß unter Anwendung der Pulvertechnologie ist seit kurzem bekannt. Als Literaturstelle kann hierzu genannt werden: DE-Firmenschrift: Micro Parts: "Die Liga-Technik".

Der Nachteil der über die Pulvertechnologie hergestellten keramischen Mikrostrukturen liegt in der begrenzten Abbildungsgenauigkeit begründet. Die Ursache hierfür ist, daß man von keramischen Pulvern ausgeht, die von ihrer Natur her eine gewisse Primärteilchengröße besitzen, die durch das auftretende Kornwachstum beim Sintern sogar noch zunimmt. Damit direkt verbunden ist ein Rückgang der Abbildungsgenauigkeit, wegen der auftretenden Oberflächenrauheit der keramischen Mikrostruktur.

Seit einiger Zeit sind Verbindungen bekannt, mit denen die Herstellung von keramischen Bauelementen aus präkeramischen Polymeren mittels Pyrolyse möglich ist. Als Literaturstelle kann hierzu genannt werden EP-A-0 466 055. Polysilazane lassen sich beispielsweise zu Strukturen aus Siliciumcarbonitrid- und Siliciumnitridkeramiken verarbeiten. Polysilane und Polycarbosilane können als Precursorsysteme zur Erzeugung von Siliciumcarbid-Keramiken benutzt werden. Siliciumcarbid, Silciumnitrid und Siliciumcarbonitrid zeigen als Reinmaterialien wie auch als dünne Schichten eine ausgezeichnete thermische und oxidative Beständigkeit und erweisen sich außerdem als inert gegenüber aggressiven Chemikalien.

EP-A-0 240 796 lehrt Katalysatorträger und ihr Verfahren zur Herstellung, bei dem einzelne der u.a. über die LIGA-Technik herstellbaren plattenförmigen Mikrostrukturkörper aufeinandergeschichtet, ausgerichtet und zu einem stabilen Körper zusammengefügt werden können. Aufgrund des nachträglichen Sinterns und des Einsatzzweckes ist nicht mit einer Oberflächengüte und Mikrostruktur im Sinne der im folgenden beschriebenen Erfindung zu rechnen.

EP-A-0 468 066 offenbart ein Verfahren zur Präparation eines gesinterten Keramikartikels unter Verwendung eines aushärtbaren keramischen Precursor, bei dem der ausgehärtete Formkörper nachträglich gesintert wird.

Zur Formung der Precursormaterialien bietet die Methode der LIGA-Technik die besten Voraussetzungen, die eine Kombination von Lithographie, Galvanoformung und Abformung ist. Sie ist beschrieben in Nuclear Instruments and Methods in Physics Research A 303 (1991) Seiten 523-535, North Holland in dem Abschnitt "Three-dimensional microfabrication using synchrotron radiation" (W. Ehrfeld and D. Münchmeyer). Sie erlaubt nämlich, ultrapräzise Strukturen in großen Stückzahlen herzustellen. Insbesondere eröffnet der Einsatz polymerer Ausgangsmaterialien eine Fülle von Anwendungsmöglichkeiten.

Die Aufgabe der vorliegenden Erfindung bestand daher darin, ein neues Verfahren zu entwickeln, mit dem sich durch Pyrolyse geeigneter Precursoren keramische Mikrostrukturen mit ultrapräziser Geometrie, d.h. einer Oberflächenrauheit < 1 µm (as fired), aus den entsprechend geformten Precursormaterialien herstellen lassen, die ausgezeichnete thermische und oxidative Beständigkeit besitzen und außerdem inert sind gegenüber aggressiven Chemikalien.

Gelöst wird diese Aufgabe durch ein Verfahren nach Patentanspruch 1, dessen nähere Ausgestaltungen in den Ansprüchen 2 bis 12 angegeben sind.

Als eigenstabile Formeinsatzmaterialien kommen solche Werkstoffe in Frage, die für die Strukturierung ausreichende Festigkeit aufweisen und so beschaffen sein sollen, daß eine hohe Abformgenauigkeit erzielt werden kann. Im Rahmen der vorliegenden Erfindung können prinzipiell polymere Materialien wie Polytetrafluorethylen (PTFE), Polycarbonat (PC) oder Polymethylmethacrylat (PMMA), metallische Materialien wie Aluminium; Kupfer oder eisenhaltige Legierungen, aber auch Glas oder Keramik als Formeinsatzmaterialien eingesetzt werden, wobei polymere Materialien im einfachsten Fall bevorzugt sind. Für spezielle Anwendungen können auch Formeinsätze aus Halbleitermaterialien, wie z.B. Silizium, eingesetzt werden, deren Struktur durch anisotropes naßchemisches Ätzen oder durch Trockenätzen vorgegeben wird.

Die Strukturierung des eigenstabilen Formeinsatzmaterials, erfolgt wie bereits erwähnt vorzugsweise mit Hilfe der LIGA-Technik. Dabei werden in der Art lithografischer Strukturierungen energiereiche Strahlen, z.B. UV, Röntgen- oder lonenstrahlen eingesetzt, denen z.B. polymere Schichten ausgesetzt werden. Die bestrahlten bzw. nichtbestrahlten Bereiche werden dann mit einer Entwicklerflüssigkeit entfernt und auf die entstandene Schablone kann dann galvanisch Nickel oder anderes Material abgeschieden werden, was schließlich zu einer Masterschablone oder, allgemeiner, zu einer Form führt. Die Strukturierung kann aber bei einfacher Geometrie auch durch spanabhebende Bearbeitung, z.B. mittels einer Wafersäge mit Sägeblattbreiten im Bereich von 15 bis 300 µm, durchgeführt werden. Durch die Verwendung verschieden breiter Sägeblätter in Kombination mit der Anbringung paralleler, unmittelbar benachbarter Schnitte läßt sich eine Vielzahl einfacher geometrischer Formen realisieren. Weitere Gestaltungsmöglichkeiten ergeben sich durch die Überlagerung einfacher geometrischer Formen, wie z.B. durch kreuzförmig übereinandergelegte Schnitte. Legt man die breiten Schnitte tiefer als die schmalen, so erhält man eine kreuzförmige Gitterstruktur mit feineren und stärkeren Rippen, bei der die feineren an die stärkeren angebunden sind.

Als Precursormaterialien kommen im Rahmen der vorliegenden Erfindung alle Materialien in Betracht, die sich formen und pyrolytisch zu Keramik zersetzen lassen. Solche Precursormaterialien sind z.B. Polysilazane, Polycarbosilane, Polysilane oder Polysiloxane, aber auch Polymere, die kein Silizium enthalten wie z.B. Borazine oder Organoaluminiumpolymere. Die daraus hergestellten Keramikmaterialien können Elementkombinationen sein, wie z.B. SiC, SiN, SiNC, SiCO, AlN, SiBN, SiBNC. Polyvinylsilazane wie sie unter der Bezeichnung 〉〉VT-50〈〈 von der Hoechst AG in Frankfurt/M. angeboten werden, haben sich im Rahmen der vorliegenden Erfindung besonders bewährt. Diese Polyvinylsilazane weisen folgende Zusammensetzung auf:

| Element | Anteil (Gew.-%) |
|---|---|
| Silizium | 35,9 |
| Stickstoff | 26,6 |
| Kohlenstoff | 31,2 |
| Wasserstoff | 5,7 |
| Sauerstoff | <0,6 |

Das Präparieren der Precursormaterialien kann auf unterschiedlichste Art erfolgen. Beispielsweise können die Materialien zunächst einem Reinigungsschritt unterworfen werden, woran sich dann ein Schmelzen, ein Verdünnen mit Lösungsmittel oder ein Aufkonzentrieren von bereits in Lösemittel gelöstem Material anschließt.

Das bereits erwähnte Polyvinylsilazan wird als Lösung in Tetrahydrofuran (THF) geliefert und liegt als niedrig viskose, leicht gelbliche Flüssigkeit mit einem THF-Anteil von 50 Gew.-% vor. Dieser Lösungsmittelanteil ist für die Abformung im Rahmen der Erfindung zu hoch, um eine Mikrostrukturierung durchführen zu können. Die Polymerlösung wird deshalb aufkonzentriert, indem nach Einfüllung der Lösung in ein Schlenkrohr durch Einleitung von Argon der THF-Anteil reduziert wird. Die Inertgaseinleitung vermeidet wirkungsvoll den unerwünschten Kontakt des Materials mit dem Luftsauerstoff der Umgebung. Das auf einen Lösungsmittelanteil im Bereich von 20 bis 35 Gew.-% aufkonzentrierte Material kann auch noch nach mehreren Tagen ohne Qualitätsverlust verwendet werden.

Eine weitere Möglichkeit, geeignetes Formmaterial aus Polyvinylsilazan 〉〉VT-50〈〈 zu gewinnen, besteht grundsätzlich darin, den Lösungsmittelanteil durch Aufheizen vollständig zu entfernen, so daß nur noch Bulkmaterial übrigbleibt. Das Bulkmaterial kann anschließend aufgeschmolzen und in die entsprechende Form eingebracht werden. Da jedoch für das Aufschmelzen eine aufwendige Heizapparatur bereitgestellt werden muß und da das Material zur Vermeidung von Qualitätsverlusten in möglichst kurzer Zeit verarbeitet werden muß, ist die Verarbeitung in Lösung erfindungsgemäß die bevorzugte Variante.

Die Formgebung der herzustellenden Mikrostrukturen ergibt sich durch die entsprechende Strukturierung des Formeinsatzes, der somit die Negativform der Mikrostruktur enthält. Die eigentliche Formgebung der Mikrostrukturen erfolgt durch Einbringung des Precursormaterials in den strukturierten Formeinsatz. Die Einbringung kann durch Gießen, Pressen, Spritzen, Spritzgießen, Mikrospritzgießen oder Prägen erfolgen. Für die Abformung werden die verschiedenen Formeinsätze aus PTFE, PC, PMMA, Aluminium oder Glas vorteilhaft in eine Halterung eingesetzt. Das aufkonzentrierte Precursormaterial wird in den Formeinsatz eingebracht, dann wird das Lösungsmittel durch Ausdiffundieren entfernt. Da das Polymermaterial leicht hydrolysiert, sollte auch dieser Präparationsschritt unter Inertgas, vorzugsweise unter Argon, erfolgen.

In der Praxis stellt sich heraus, daß vorzugsweise Formeinsätze aus PTFE und PMMA für die Herstellung der erfindungsgemäßen Mikrostrukturen aus Polyvinylsilazan in Frage kommen, Materialien wie Polycarbonat, Aluminium oder Glas führen in Verbindung mit Polyvinylsilazan leichter zu Qualitätsverlusten.

Die geformten Precursormaterialien werden vorzugsweise aus dem strukturierten Formeinsatzmaterial entnommen und in einem zusätzlichen Behandlungsschritt unschmelzbar gemacht. Hierzu können die geformten Precursormaterialien wahlweise chemisch z.B. durch Hydrolyse oder mit Hilfe von aktinischer Strahlung, vorzugsweise thermisch, vernetzt werden.

Um den Einfluß des Formeinsatzmaterials bei der Pyrolyse beurteilen zu können, wird ein Teil der Mikrostrukturen vorsichtig vom Formeinsatz entfernt, so daß sowohl Proben mit und ohne Formeinsatz zur Verfügung stehen. Bei Proben, die mit Formeinsatz pyrolysiert werden, wird das Formeinsatzmaterial durch Pyrolyse zersetzt und die Form geht verloren.

Die Pyrolyse erfolgt in einem gasdichten Brennofen unter Vakuum oder Inertgasatmosphäre. Mit einer Heizrate im Bereich von 0,1 bis 10 K/min, vorzugsweise von 0,5 bis 4 K/min, werden die Proben auf eine Temperatur im Bereich von 700 bis 2000°C, vorzugsweise von 900 bis 1400°C, aufgeheizt. Die Endtemperatur wird im einfachsten Fall mit konstanter Heizrate angesteuert und dann über eine Zeitdauer von 0 bis 180 min, vorzugsweise von 15 bis 120 min, konstant gehalten. Während der Pyrolyse erfolgt der Abbau des Formeinsatzmaterials und die Umwandlung des Precursormaterials in eine Keramik. Die Prozeßführung kann hinsichtlich des gleichmäßigen Masseabbaus noch optimiert werden, insbesondere kann zur Vermeidung von Rissen in dem keramischen Material die Aufheizgeschwindigkeit bei bestimmten Temperaturen verlangsamt werden, um die Pyrolysereaktion nicht zu heftig ablaufen zu lassen. Nähere Angaben hierzu finden sich in der DE-A-37 37 921.

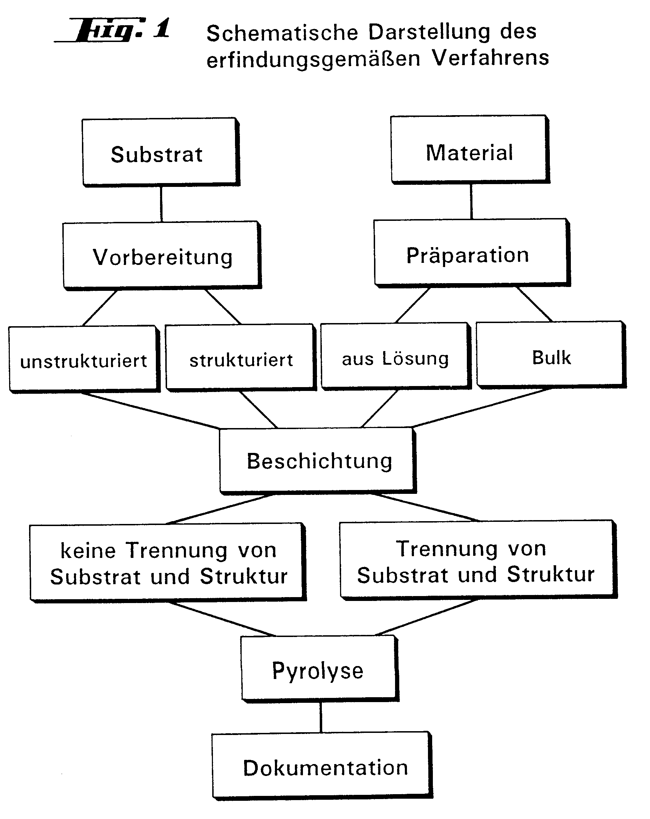

Das erfindungsgemäße Verfahren, das in der beigefügten **Abbildung 1** nochmal schematisch dargestellt ist, bietet einen erfolgversprechenden Ansatz zur Herstellung keramischer Mikrostrukturen mit ultrahoher Präzision aus polymeren Precursoren. Durch die erfindungsgemäße Art der Abformung ist es möglich, auch feinste Konturen des Formeinsatzes hochpräzise wiederzugeben. Durch kontrollierte Steuerung des Masseabbaus des Formeinsatzmaterials während der Pyrolyse über die Prozeßführung kann die Entstehung von Rissen in den keramisierten Mikrostrukturen wirksam vermieden werden.

Durch gezielte Oberflächenbehandlung lassen sich auch andere Formeinsatzmaterialien für das erfindungsgemäße Verfahren erfolgreich nutzbar machen. Formeinsatzmaterialien aus Metall oder Glas können durch eine Plasmabehandlung ihrer Oberflächen beschichtet werden. Dadurch wird erreicht, daß Formeinsatz und Struktur leichter voneinander getrennt werden können. Gute Ergebnisse werden auch bei der Beschichtung der Formeinsatzoberfläche mit einem Edelmetall erreicht.

Bei ausreichender Viskosität des Precursormaterials ergibt sich die Möglichkeit der lösungsmittelfreien Herstellung von Mikrostrukturen und damit auch die Realisierung von Mikrospritzguß- und Mikroprägeverfahren.

Aufgrund der Härte, der thermischen und chemischen Stabilität und des relativ niedrigen spezifischen Gewichts lassen sich keramische Mikrostrukturen, wie sie sich mittels des erfindungsgemäßen Verfahrens herstellen lassen, vielseitig verwenden.

Besonders vielversprechend ist die Herstellung von Mikrofiltrationselementen zum Einsatz in chemisch aggressiven Flüssigkeiten bei hohen Temperaturen. Ähnlich hohe Anforderungen werden auch oft an Komponenten der elektronischen und optischen Aufbau- und Verbindungstechnik, an Bauteile der Mikrofluidik, oder in der Kraftstoffeinspritztechnik gestellt, wobei außerdem eine besonders präzise Abformgenauigkeit erforderlich ist.

Komplexe Mikrosysteme, im allgemeinen bestehend aus Sensoren, Mikroaktoren, Informationsverarbeitung mit Peripherie und der Schnittstelle, werden schon bald wesentlich an Bedeutung gewinnen, unter anderem in den Bereichen chemische und molekularbiologische Analyseprozesse. Eng damit verwandt ist das Anwendungsgebiet der Sensorik. Schon heute besteht Interesse an Mikrostrukturen, die sich zur Messung optischer, mechanischer, elektrischer und chemischer Größen einsetzen lassen und in intelligente Systeme auf kleinstem Raum integriert werden können.

Keramische Werkstoffe sind aufgrund ihrer spezifischen Eigenschaften darüber hinaus für Mikrostrukturen unverzichtbar, die in Bauelementen für die Mikrowellentechnik Verwendung finden sollen. Sie eignen sich auch für Halterungsstrukturen in Komponenten der integrierten Optik. Ihr Einsatz ist auch in "3d-packaging" Bauelementen der Mikroelektronik sowie für Strukturen in Displays von flachen Bildschirmen vorstellbar.

Das erfindungsgemäße Verfahren zeigt, daß sich präkeramische Polymere zur Abformung keramischer Mikrostrukturen eignen, wobei eine überraschend hohe Abbildungsgenauigkeit der vorgegebenen Strukturen erzielt wird. Die erhaltene keramische Oberfläche zeigte überraschenderweise eine äußerst geringe Oberflächenrauhigkeit. Die Vielfalt der möglichen technischen Anwendungen erfindungsgemäß hergestellter Strukturen, insbesondere unter Einbeziehung des gesamten LIGA-Prozesses, läßt eine rasche Umsetzung des erfindungsgemäßen Verfahrens in die Praxis erwarten.

Die Erfindung wird nachfolgend durch Ausführungsbeispiele näher erläutert, ohne auf die konkret dargestellten Ausführungsformen beschränkt zu sein. Der erfindungsgemäße Präparationsprozeß ließ sich insbesondere für Formeneinsätze aus PTFE und PMMA zufriedenstellend durchführen. Bei keinem der Ausführungsbeispiele wird die Bildung von Fehlstellen infolge der Präparation aus der Polysilazanlösung beobachtet. Für die einzelnen Materialien ergeben sich folgende Befunde:

### Beispiel 1: PTFE

Grundsätzlich führt die Herstellung polymerkeramischer Mikrostrukturen unter Verwendung von PTFE als Formeinsatzmaterial zu befriedigenden Ergebnissen. Die Einbringung von Schnitten erweist sich als schwierig, das Material weicht der Wafersäge bei sehr kleinen Kanalbreiten aus und kreuzförmige Kanalmuster können nicht ohne weiteres hergestellt werden. Erwartungsgemäß lassen sich die polymeren Strukturen aus Polyvinylsilazan leicht ablösen.

### Beispiel 2: PMMA

PMMA zeigt als Formeinsatzmaterial die besten Ergebnisse. Bei der Strukturierung wirkt sich die im Vergleich zu PTFE höhere Festigkeit aus, so daß auch sehr scharfe Konturen erzeugt werden können. Die Konturen des Wafersägeblattes zeichnen sich dabei deutlich am Kanalboden ab. Die Verwendung von PMMA ist auch im Hinblick auf die Pyrolyse günstig. Die Ablösung der Struktur vom Formeinsatz erweist sich aber als schwieriger als beim PTFE.

### Beispiel 3: Verhalten der Proben während der Pyrolyse

Die Pyrolyse kann ohne Probleme unter folgenden Bedingungen durchgeführt werden:
- Heizrate:: 1 K/min
- Endtemperatur:: 1000°C
- Haltezeit:: 1 h
- Ofenatmosphäre:: N₂

Der Formeinsatz wird vorher von der Probe entfernt.

Bei den zusammen mit dem Formeinsatz pyrolysierten Proben ergeben sich allerdings Beeinträchtigungen infolge der unterschiedlichen Materialeigenschaften. Während der Pyrolyse erfährt das Polyvinylsilazan eine merkliche Volumenschwindung. Damit dieser Vorgang spannungsfrei verlaufen kann, darf diese Schwindung nicht vom Formeinsatzmaterial behindert werden. Erfolgt die Schwindung des Polyvinylsilazans schneller als der Abbau des Formeinsatzmaterials infolge der Pyrolyse, so entstehen Spannungen, die wiederum zur Bildung von Rissen in der Mikrostruktur führen.

Um den Entwicklungsgang nachzuvollziehen, wurden die verschiedenen Stadien der Versuchsdurchführung am Beispiel einer exemplarisch hergestellten Grundstruktur auf einem PMMA-Formeinsatz durch Aufnahmen mit dem Rasterelektronenmikroskop dokumentiert.

Gemäß der Reihenfolge des Herstellungsprozesses erfolgten die Aufnahmen:
- am strukturierten PMMA-Formeinsatz,
- von der nicht pyrolisierten polymeren Mikrostruktur,
- von der pyrolysierten keramischen Mikrostruktur.

Die erzielte hohe Abbildungsgenauigkeit der hergestellten keramischen Strukturen wurde durch die Messung der Oberflächenrauhigkeit mit Hilfe der Atomic-Force Mikroskopie (AFM) und der Profilometer-Meßmethode nachgewiesen.

Anschließend wurde die Zusammensetzung der fertiggestellten keramischen Mikrostruktur bestimmt.

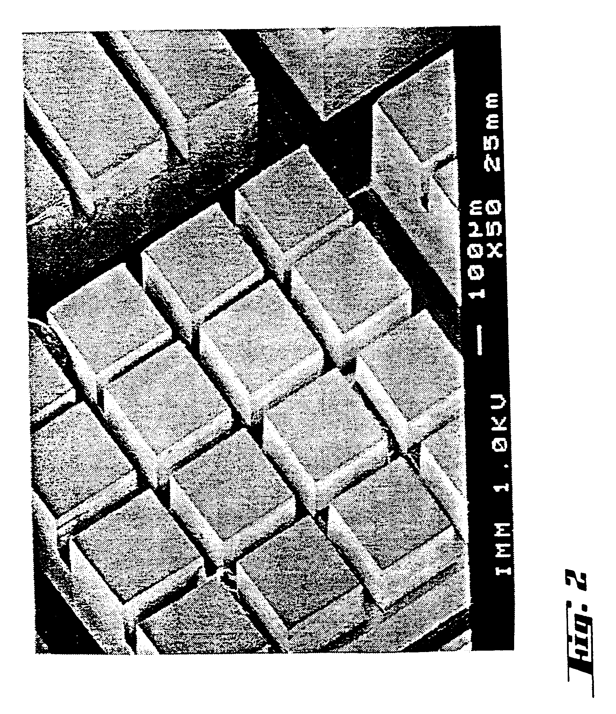

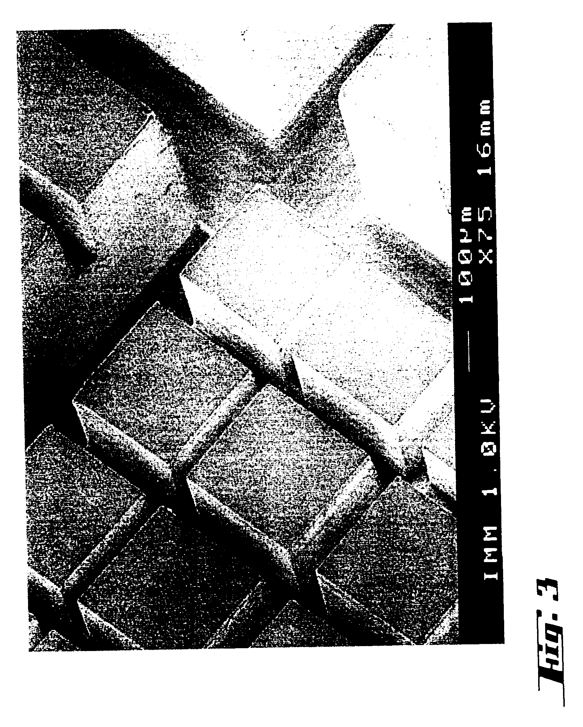

Die Abbildungen 2 und 3 zeigen rasterelektronenmikroskopische Aufnahmen des strukturierten PMMA-Formeinsatzes. Als Beispiel dient eine kreuzförmige Gitterstruktur mit stärkeren und feineren Rippen. Die Aufnahme eines Gitterstruktursegments des strukturierten PMMA-Formeinsatzes mit der feineren Quaderstruktur in der vertikalen Draufsicht gibt Abbildung 2 wieder. Breite und Tiefe der Kanäle betragen jeweils 324 beziehungsweise 300 µm für die größere, 100 µm beziehungsweise 120 µm für die feinere Quaderstruktur. Die angegebenen Kanaltiefen ergeben sich aus den Einstellungen an der Wafersäge. Die Abbildung 3 zeigt eine Darstellung bei einem Aufnahmewinkel von 20 °. Dabei ist die Schnittriefenbildung am Boden deutlich zu erkennen.

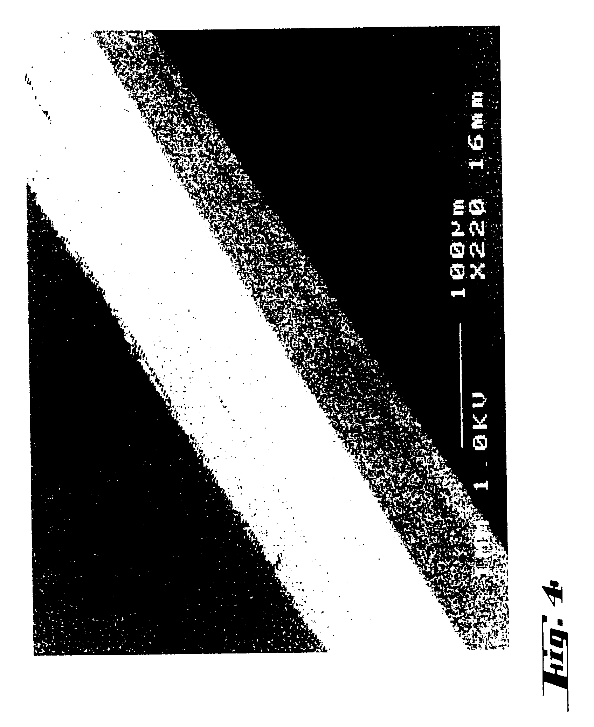

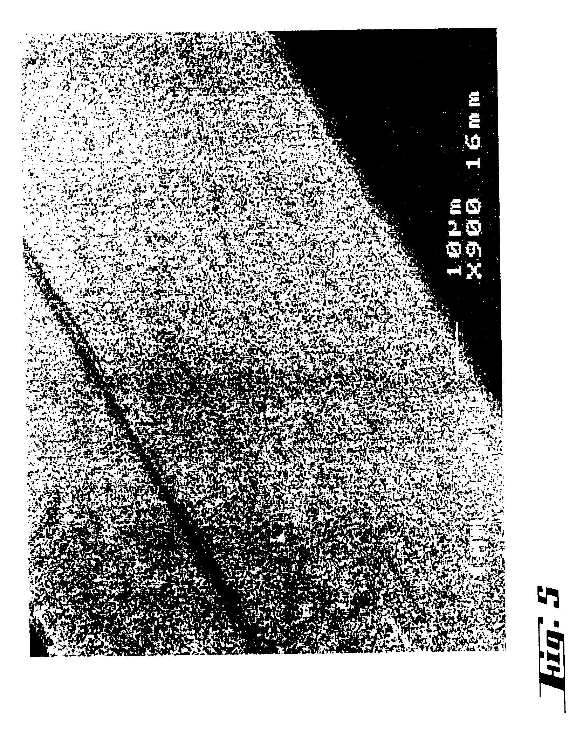

Die Abbildungen 4 und 5 zeigen rasterelektronenmikroskopische Aufnahmen der nicht pyrolysierten polymeren Mikrostruktur. Die vom Formeinsatz abgelöste, noch nicht pyrolysierte, polymere Mikrostruktur ist in Abbildung 4 wiedergegeben. Die Aufnahme zeigt als Detailausschnitt einen Balken von 100 µm Breite und 100 µm Höhe. Die außerordentlich hohe Präzision der Abformung führt dazu, daß sogar Einzelheiten des Sägeprozesses in die abgeformte polymere Mikrostruktur übertragen werden. Der in Abbildung 5 stark vergrößert wiedergegebene Bildausschnitt eines Balkens läßt die Spuren zweier nacheinander ausgeführter Sägeschnitte in Form einer Schnittriefe deutlich erkennen. Die Riefe, die in der Balkenoberfläche erscheint, ist auf den zweiten, versetzt ausgeführten Schnitt mit der Wafersäge zurückzuführen.

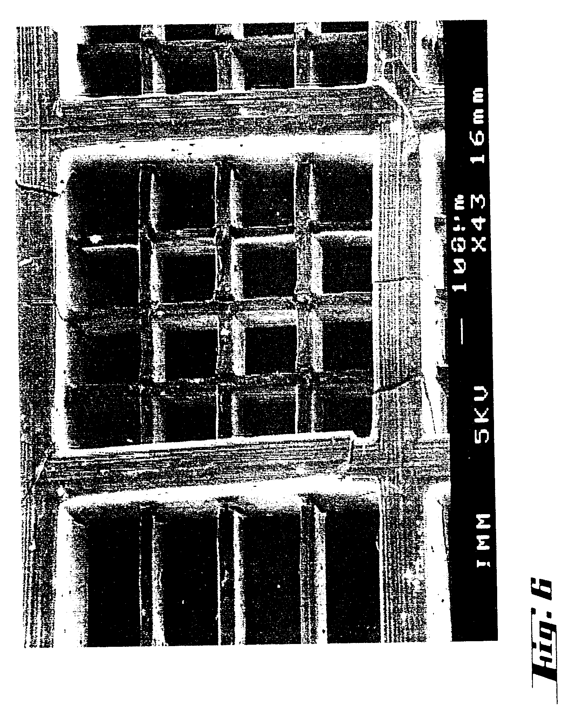

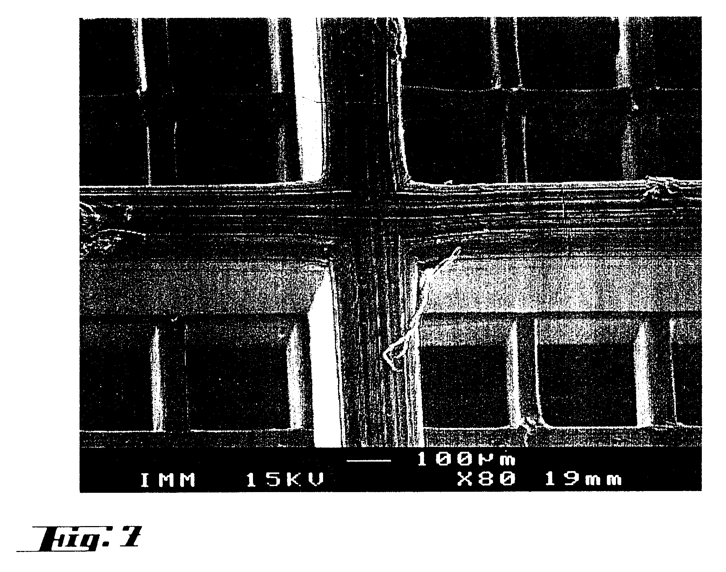

Die Abbildungen 6 bis 9 zeigen rasterelektronenmikroskopische Aufnahmen der keramischen Mikrostruktur, die sich aus dem erfindungsgemäßen Herstellungsprozeß ergibt. Eine Mikrostruktur, die nach gemeinsamer Pyrolyse und anschließender Trennung von PMMA-Formeinsatz und keramisiertem Polymer gewonnen wurde, ist in einer Übersichtsaufnahme (Abbildung 6) gezeigt. In dieser Abbildung kommt die charakteristische, der Überlagerung der großen und kleinen im Formeinsatz ausgesägten Kanäle entsprechende Gitterstruktur mit Stegbreiten von 220 µm beziehungsweise 67 µm und Steghöhen von 214 µm beziehungsweise 85 µm deutlich zum Vorschein. Abbildung 7 zeigt einen vergrößerten Ausschnitt einer 220 µm breiten Stegoberfläche, bei der wiederum die vom Wafersägeblatt hervorgerufene Konturierung der Balkenoberfläche deutlich sichtbar wird.

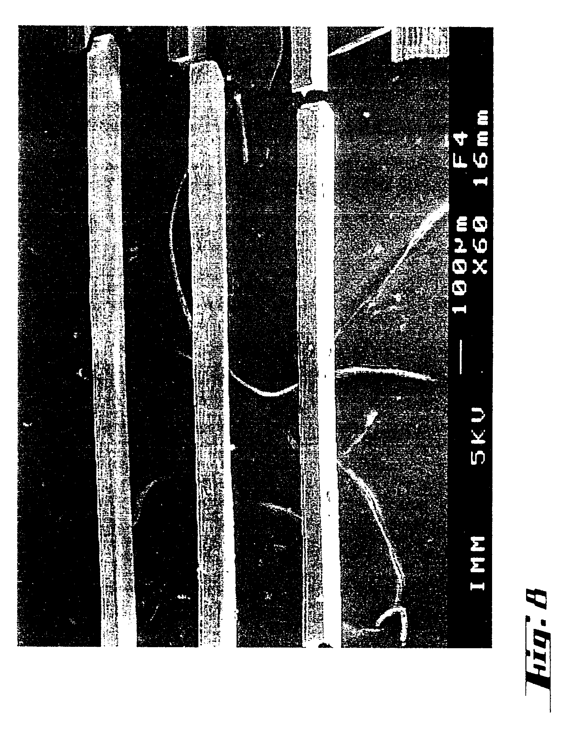

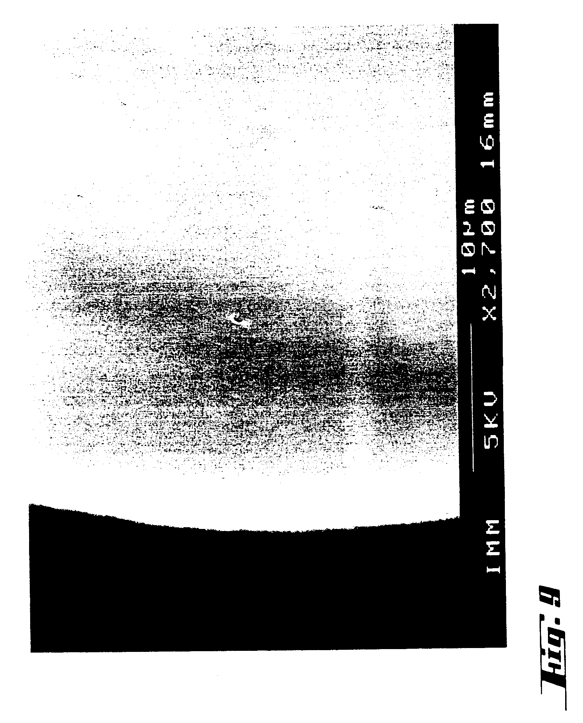

Während der gemeinsamen Pyrolyse von Polymermaterial und Formeinsatz kann es zu Beschädigungen der Mikrostrukturen kommen. Die nach Bruch einer solchen Struktur freistehenden Stege von 59 µm Breite und 90 µm Höhe sind in Abbildung 8 dokumentiert. Der vergrößerte Ausschnitt einer solchen Bruchoberfläche ist in Abbildung 9 dargestellt. Dabei erkennt man, daß sich trotz der mechanischen Belastung bei dem Bruch eine fehlstellenfreie Oberfläche ergibt.

In Verbindung mit den für die rasterelektronenmikroskopischen Aufnahmen hergestellten Mikrostrukturen wurde eine Untersuchung zur Bestimmung der Oberflächenrauhigkeit durchgeführt.

Um die ultrapräzise Abbildungsgenauigkeit der hergestellten Mikrostrukturen aufzuzeigen und zu verifizieren, wurden Oberflächenrauhigkeitsmessungen an der erfindungsgemäßen Keramik durchgeführt. Als Vergleich wurde die über die Pulvertechnologie, konventionell hergestellte Siliciumnitridkeramik mit aufgeführt.

Es wurden zwei unterschiedliche Meßmethoden angewendet:

### a) Profilometer

- Gerätetyp:: α- Step 200; Fa. Tencor
- Länge eines Scans:: 80 µm
- Auflösung:: 0,5 nm vertikal
40 nm horizontal

### b) Atomic Force Microscope (AFM)

- Gerätetyp:: SFM-BD2; Fa. Park Scientific Instruments
- Scanfläche:: 5 µm x 5 µm und 0,75 µm x 0,75 µm
- Auflösung:: 0,004 nm vertikal
- Max. vertikale Stufe:: 2 µm

Das Ergebnis der Oberflächenrauheit ist als maximaler Höhenunterschied sogenannte "Peak to Valley"-Meßwert angegeben.

| | ** Konventionelle Keramik (as fired) | Erfindungsgemäße Keramik | Standardabweichung vom Mittelwert |
|---|---|---|---|
| Profilometer | 3,8 µm | 149 nm | |

| Atomic-Force Microscope | | | |
|---|---|---|---|
| Scan 5 x 5 µm² | n.m.^{*} | 111 nm | 13,4 nm |
| Scan 0,75 x 0,75 µm² | n.m.^{*} | 17,3 nm | 2,4 nm |

| | | | |
|---|---|---|---|
| * n.m. = nicht meßbar, da Oberflächenrauhigkeit zu hoch (> 2 µm). | | | |
| ** Konventionell hergestellte Siliciumnitridkeramik, druckgesintert, mittlere Korngröße 0,5 µm, Fa. Ube. | | | |

Die Analyse der Probenzusammensetzung nach der Pyrolyse ergab folgende Elementanteile (Gew.%):

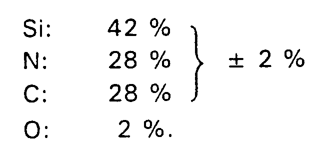

An den hergestellten Proben wurden danach die folgenden Parameter gemessen:
- Oxidationsbeständigkeit: bestimmt durch Erhitzen der Probe auf eine Temperatur von 1400°C in Luftatmosphäre über eine Zeitdauer von 1 h. Der Masseverlust war ≤ 1 Gew.-%.
- Thermische Beständigkeit: > 1600°C;
- Phasenzusammensetzung: bis zu einer Temperatur von 1500°C in Inertgasatmosphäre, Haltezeit 1 Stunde, ist das Pyrolyseprodukt röntgenamorph d.h. die Kristallitgröße ist kleiner als 5 nm, ab 1600°C wird teilweise Kristallisation von α-Si₃N₄ und β-SiC beobachtet, wobei die mittlere Kristallitgröße ca. 20 nm beträgt. Die röntgendiffraktometrischen Untersuchungen wurden mit einem Siemensdiffraktometer durchgeführt, Strahlungsquelle Cu_{Kα}.
- Chemische Beständigkeit:

| | | |
|---|---|---|
| 20 % NaOH | 100 h | Siedetemperatur → Δm = 0,1 Gew.-%, |
| 20 % HCl | 100 h | Siedetemperatur → Δm = 0,06 Gew.-%, |
| konz. HNO₃ | 100 h | Siedetemperatur → Δm = 0,006 Gew.-%, |
| konz. H₂SO₄ | 100 h | Siedetemperatur → Δm = 1,3 Gew.-%. |

## Patentansprüche

1. Verfahren zur Herstellung von keramischen Mikrostrukturen mit einer Oberflächenprofiltiefe von kleiner als 1 µm, gemessen nach der Atomic-Force-Methode, bei dem polymere Precursormaterialien zunächst präpariert werden, dann durch Einbringen in Strukturierungen von eigenstabilem Formeinsatzmaterial geformt werden, wobei als eigenstabile Formeinsatzmaterialien Werkstoffe verwendet werden, die für die Strukturierung ausreichende Festigkeit aufweisen und so beschaffen sind, daß eine hohe Abformgenauigkeit erzielt wird, und wobei das geformte Precursormaterial durch eine chemische Vernetzung oder durch eine Vernetzung mit Hilfe von aktinischer Strahlung unschmelzbar gemacht wird und abschließend pyrolysiert wird.

2. Verfahren nach Anspruch 1, dadurch gekennzeichnet, daß die Strukturierung des eigenstabilen Formeinsatzmaterials mittels der LIGA-Technik erfolgt, bei der eine Kombination von Lithographie, Galvanoformung und Abformung zum Einsatz kommt.

3. Verfahren nach Anspruch 1 oder 2, dadurch gekennzeichnet, daß als eigenstabile Formeinsatzmaterialien Polytetrafluorethylen, Polycarbonat, Polymethylmethacrylat verwendet werden.

4. Verfahren nach einem der Ansprüche 1 bis 3, dadurch gekennzeichnet, daß die chemische Vernetzung mittels Hydrolyse oder aktinischer Strahlung durchgeführt wird.

5. Verfahren nach einem der Ansprüche 1 bis 4, dadurch gekennzeichnet, daß als Precursormaterialien Polysilazane, Polycarbosilane, Polysilane oder Polysiloxane, aber auch Polymere, die kein Silizium enthalten, wie Borazine oder Organoaluminiumpolymere, oder Gemische von all diesen, vorzugsweise Polysilazane, Polycarbosilane, Polyborosilane und Polysilane, besonders bevorzugt Polyvinylsilazane, verwendet werden.

6. Verfahren nach Anspruch 5, dadurch gekennzeichnet, daß Polyvinylsilazan als Lösung in Tetrahydrofuran mit einem Lösungsmittelanteil von 20 bis 35 Gew.-% verwendet wird.

7. Verfahren nach einem der Ansprüche 1 bis 6, dadurch gekennzeichnet, daß die Präparation der Precursormaterialien durch Schmelzen, Verdünnen mit Lösemittel oder Verdicken erfolgt.

8. Verfahren nach Anspruch 7, dadurch gekennzeichnet, daß zur Präparation des Precursormaterials der Lösemittelanteil durch Einleitung von Inertgas auf eine Menge im Bereich von 20 bis 35 Gew.-% reduziert wird.

9. Verfahren nach einem der Ansprüche 1 bis 8, dadurch gekennzeichnet, daß zur Preparation der Precusormaterialien aktive und nicht aktive Füllstoffe, wie feinteiliges Keramik- oder Metallpulver, in einer Menge von 0 bis 60 Vol.-%, bezogen auf das Gesamtvolumen der Mischung, zugesetzt werden.

10. Verfahren nach einem der Ansprüche 1 bis 9, dadurch gekennzeichnet, daß die Formgebung der Mikrostrukturen durch Einbringung des Precursormaterials in den strukturierten Formeinsatz durch Gießen, Pressen, Spritzen, Spritzgießen, Mikrospritzgießen oder Prägen erfolgt und daß dann das Lösungsmittel durch Ausdiffundieren entfernt wird.

11. Verfahren nach einem der Ansprüche 1 bis 10, dadurch gekennzeichnet, daß die Pyrolyse in einem gasdichten Brennofen unter Vakuum oder einer Inert- oder Reaktivgasatmosphäre durchgeführt wird, wobei die geformten Mikrostrukturen mit einer Heizrate von 0,1 bis 10 K/min auf eine Temperatur im Bereich von 700 bis 2000°C, vorzugsweise von 900 bis 1400°C, aufgeheizt werden und wobei die Endtemperatur dann über eine Zeitdauer von 0 bis 180 min, vorzugsweise von 15 bis 120 min, konstant gehalten wird.

12. Verfahren nach einem der Ansprüche 1 bis 11, dadurch gekennzeichnet, daß die resultierende Keramik Karbide, Nitride, Borde, Oxide und deren Gemische ergibt, vorzugsweise Elementkombinationen aus Si, N, C, O, B und Al, wobei mindestens zwei dieser Elemente in der Keramik enthalten sind.

13. Verwendung von Mikrostrukturen hergestellt nach einem Verfahren nach einem der Ansprüche 1 bis 12 als Mikrotrennelemente zum Einsatz in Verfahren zur Trennung von Stoffgemischen in chemisch aggressiven Flüssigkeiten bei hohen Temperaturen.

14. Verwendung von Mikrostrukturen hergestellt nach einem Verfahren nach einem der Ansprüche 1 bis 12 als Bauteile in der Kraftstoffeinspritztechnik.

15. Verwendung von Mikrostrukturen hergestellt nach einem Verfahren nach einem der Ansprüche 1 bis 12 in der Sensorik bei der Messung physikalischer, insbesondere optischer, mechanischer oder elektrischer, und chemischer Größen.

16. Verwendung von Mikrostrukturen hergestellt nach einem Verfahren nach einem der Ansprüche 1 bis 12 in Bauelementen für die Mikrowellentechnik und in Komponenten der integrierten Optik.

17. Verwendung von Mikrostrukturen hergestellt nach einem Verfahren nach einem der Ansprüche 1 bis 12 in Bauelementen für Mikrosysteme, insbesondere Aktoren und Sensoren.

## Claims

1. A process for producing ceramic microstructures having a surface profile depth of less than 1 µm, measured by the atomic force method, which comprises first preparing a polymeric precursor material, then shaping it by introduction into structures of inherently stable mold insert material, with the inherently stable mold insert materials used being materials which have sufficient strength for structuring and are such that a high molding accuracy is achieved, and the shaped precursor material being made infusible by chemical crosslinking or by crosslinking with the aid of actinic radiation and finally being pyrolyzed.

2. The process as claimed in claim 1, wherein the structuring of the inherently stable mold insert material is carried out by means of the LIGA method in which a combination of lithography, electroforming and molding is used.

3. The process as claimed in claim 1 or 2, wherein the inherently stable mold insert materials used are polytetrafluoroethylene, polycarbonate and polymethyl methacrylate.

4. The process as claimed in any one of claims 1 to 3, wherein the chemical crosslinking is carried out by means of hydrolysis or actinic radiation.

5. The process as claimed in any one of claims 1 to 4, wherein the precursor materials used are polysilazanes, polycarbosilanes, polysilanes or polysiloxanes, or else polymers which do not contain silicon, such as borazines or organoaluminum polymers, or mixtures of all these, preferably polysilazanes, polycarbosilanes, polyborosilanes and polysilanes, particularly preferably polyvinylsilazanes.

6. The process as claimed in claim 5, wherein polyvinylsilazane is used as a solution in tetrahydrofuran having a solvent content of 20 to 35% by weight.

7. The process as claimed in any one of claims 1 to 6, wherein the preparation of the precursor materials is carried out by melting, dilution with solvent or thickening.

8. The process as claimed in claim 7, wherein for the preparation of the precursor material the solvent content is reduced to an amount in the range from 20 to 35% by weight by passing in inert gas.

9. The process as claimed in any one of claims 1 to 8, wherein for the preparation of the precursor materials active and non-active fillers, such as finely divided ceramic or metal powder, are added in an amount of from 0 to 60% by volume, based on the total volume of the mixture.

10. The process as claimed in any one of claims 1 to 9, wherein the shaping of the microstructures is carried out by introducing the precursor material into the structured mold insert by casting, pressing, spraying, injection molding, micro-injection molding or stamping and the solvent is then removed by outward diffusion.

11. The process as claimed in any one of claims 1 to 10, wherein the pyrolysis is carried out in a gastight firing furnace in vacuo or in an inert or reactive gas atmosphere, with the shaped microstructures being heated to a temperature in the range from 700 to 2000°C, preferably from 900 to 1400°C, at a heating rate of from 0.1 to 10 K/min and the final temperature then being kept constant for a period of from 0 to 180 min, preferably from 15 to 120 min.

12. The process as claimed in any one of claims 1 to 11, wherein the resulting ceramic gives carbides, nitrides, borides, oxides and mixtures thereof, preferably elemental combinations of Si, N, C, O, B and Al, with at least two of these elements being present in the ceramic.

13. Use of microstructures produced by a process as claimed in any one of claims 1 to 12 as micro-separation elements for application in processes for separating mixtures of materials in chemically aggressive liquids at high temperatures.

14. Use of microstructures produced by a process as claimed in any one of claims 1 to 12 as components in fuel injection technology.

15. Use of microstructures produced by a process as claimed in any one of claims 1 to 12 in sensor technology in the measurement of physical, in particular optical, mechanical or electrical, and chemical parameters.

16. Use of microstructures produced by a process as claimed in any one of claims 1 to 12 in components for microwave technology and in components for integrated optics.

17. Use of microstructures produced by a process as claimed in any one of claims 1 to 12 in components for microsystems, in particular actuators and sensors.

## Revendications

1. Procédé de fabrication de microstructures céramiques avec une profondeur de profil de surface de moins de 1 µm, mesurée par la méthode de la force atomique, dans lequel des matériaux de précurseurs polymères sont d'abord préparés, puis sont moulés en les chargeant dans des structurations d'un matériau de noyau de moule intrinsèquement stable, dans lequel on utilise comme matériaux de noyaux de moules intrinsèquement stables des matières qui présentent une tenue mécanique suffisante pour la structuration et qui sont traitées de manière a parvenir à une haute précision de moulage, et dans lequel on rend le matériau de précurseur moulé infusible au moyen d'une réticulation chimique ou au moyen d'une réticulation à l'aide de rayonnement actinique et on le pyrolyse ensuite.

2. Procédé selon la revendication 1, caractérisé en ce que l'on réalise la structuration du matériau de noyau de moule intrinsèquement stable au moyen de la technique LIGA, dans laquelle on utilise une combinaison de lithographie, de galvanoplastie et de moulage.

3. Procédé selon la revendication 1 ou 2, caractérisé en ce que l'on utilise comme matériaux de noyau de moule intrinsèquement stables du polytétrafluoroéthylène, du polycarbonate, du polyméthacrylate de méthyle.

4. Procédé selon l'une des revendications 1 à 3, caractérisé en ce que la réticulation chimique est réalisée par hydrolyse ou au moyen de rayonnement actinique.

5. Procédé selon l'une des revendications 1 à 4, caractérisé en ce que l'on utilise comme matériaux précurseurs des polysilazanes, des polycarbosilanes, des polysilanes ou des polysiloxanes, mais aussi des polymères qui ne contiennent pas de silicium, comme le borazole ou des polymères organométalliques d'aluminium, ou des mélanges de tous ceux-ci, de préférence des polysilazanes, des polycarbosilanes, des polyborosilanes et des polysilanes, de manière particulièrement préférée des polyvinylsilazanes.

6. Procédé selon la revendication 5, caractérisé en ce que l'on utilise du polyvinylsilazane en solution dans du tétrahydrofurane avec un titre en solvant de 20 à 35% en poids.

7. Procédé selon l'une des revendications 1 à 6, caractérisé en ce que la préparation des matériaux précurseurs est effectuée par fusion, dilution avec du solvant ou concentration.

8. Procédé selon la revendication 7, caractérisé en ce que, pour la préparation du matériau précurseur, on réduit, par introduction de gaz inerte, la teneur en solvant à une quantité de l'ordre 20 à 35% en poids.

9. Procédé selon l'une des revendications 1 à 8, caractérisé en ce que, pour la préparation des matériaux précurseurs, on ajoute des charges active et inactives, comme de la poudre de céramique ou de métal finement divisée, en une quantité de 0 à 60% en volume, par rapport au volume global du mélange.

10. Procédé selon l'une des revendications 1 à 9, caractérisé en ce que l'on réalise le façonnage des microstructures en introduisant le matériau précurseur dans le noyau de moule structuré par coulage, pressage, injection, moulage par injection, micromoulage par injection ou estampage et en ce qu'on élimine ensuite le solvant par outdiffusion.

11. Procédé selon l'une des revendications 1 à 10, caractérisé en ce que l'on réalise la pyrolyse dans un four de grillage étanche aux gaz sous vide ou sous une atmosphère de gaz inertes ou réactifs, dans lequel on chauffe les microstructures moulées à une température de l'ordre de 700 à 2000°C, de préférence de 900 à 1400°C, avec une vitesse de montée en température de l'ordre de 0,1 à 10 K/min, et dans lequel on maintient ensuite constante la température final pendant une durée de 0 à 180 min, de préférence de 15 à 120 min.

12. Procédé selon l'une des revendications 1 à 11, caractérisé en ce que la céramique résultante donne des carbures, des nitrures, des borures, des oxydes et leurs mélanges, de préférence des combinaisons d'éléments à base de Si, N, C, O, B et Al, dans lequel au moins deux de ces éléments sont contenus dans la céramique.

13. Utilisation de microstructures fabriquées par un procédé selon l'une des revendications 1 à 12 comme éléments de microséparation destinés à des procédés de séparation de mélanges de matières dans des liquides chimiquement agressifs à des températures élevées.

14. Utilisation de microstructures fabriquées par un procédé selon l'une des revendications 1 à 12 comme composants dans la technologie de l'injection de carburants.

15. Utilisation de microstructures fabriquées par un procédé selon l'une des revendications 1 à 12 dans l'analyse sensorielle pour la mesure de grandeurs physiques, en particulier optiques, mécaniques ou électriques, et chimiques.

16. Utilisation de microstructures fabriquées par un procédé selon l'une des revendications 1 à 12 dans des composants pour la technologie des micro-ondes et dans des composants de l'optique intégrée.

17. Utilisation de microstructures fabriquées par un procédé selon l'une des revendications 1 à 12 dans des composants pour des microsystèmes, en particulier des actionneurs et des capteurs.
